# EUROPÄISCHE PATENTSCHRIFT

(11) **EP 0 668 330 B1**
(45) Veröffentlichungstag und Bekanntmachung des Hinweises auf die Patenterteilung: **03.12.1997**
(21) Anmeldenummer: 95101346.5
(22) Anmeldetag: 01.02.1995
(51) Int. Cl.: C09D 4/00, C09D 4/06, C08F 299/06

(54) **Verwendung von UV-härtbaren Beschichtungsmitteln zur Beschichtung von Polycarbonatformkörpern**
Use of UV-curable coating agents for coating of polycarbonate mouldings
Utilisation de produits de revêtement durcissables par rayonnement UV pour le revêtement d'objets roulés en polycarbonate

(30) Priorität: 14.02.1994 DE 4404616
(43) Veröffentlichungstag der Anmeldung: 23.08.1995
(73) Patentinhaber: BAYER AG, 51368 Leverkusen (DE)
(72) Erfinder: Meixner, Jürgen, Dr., D-47803 Krefeld (DE); Fischer, Wolfgang, Dr., D-40668 Meerbusch (DE); Pedain, Josef, Dr., D-51061 Köln (DE)

(56) Entgegenhaltungen:
- EP-A- 0 347 610
- EP-A- 0 549 116
- WO-A-86/06730

## Beschreibung

Die Erfindung betrifft die Verwendung von speziellen, UV-härtbaren Beschichtungsmitteln auf Basis von Urethan-modifizierten Acrylatharzen zur Beschichtung von Formkörpern aus thermoplastischen Polycarbonaten.

Polycarbonatformkörper werden aufgrund ihrer ausgezeichneten Eigenschaften, wie Transparenz, Schlagfestigkeit bzw. Stoßfestigkeit und Zugfestigkeit vielfältig verwendet. Die Eigenschaften der Oberfläche des Materials, wie ihre geringe Abrieb- und Kratzfestigkeit und die geringe Beständigkeit gegebenüber Lösungsmitteln, sind jedoch für viele Einsatzgebiete ungenügend.

Zur Beseitigung dieses Mangels wurden in der Vergangenheit die unterschiedlichsten Lösungsvorschläge gemacht, wobei insbesondere die Beschichtung der Formkörper mit UV-härtenden Lacksystemen im Mittelpunkt der Bemühungen stand (vgl. z.B. PCT-Anmeldungen WO 80/00968 und 86/04592, US-PS 3 968 305, EP-A 0 274 595 oder EP-A 0 274 596). Die Verfahren dieser Vorveröffentlichungen weisen jedoch noch eine Reihe gravierender Nachteile auf, insbesondere sind die Haftung der Lacke bzw. die mit den Lacken erzielte Kratzfestigkeit noch nicht voll zufriedenstellend. Die Beschichtungsmittel der letztgenannten beiden Vorveröffentlichungen härten im übrigen nur unter Stickstoff als Inertisierungsmedium aus.

Die Beschichtungsmittel auf Basis von Urethangruppen aufweisenden Polyacrylatharzen gemäß EP-A 0 020 344 bzw. gemäß PCT-Anmeldung WO 80/00942 führen ebenfalls zu Beschichtungen, die bezüglich Kratzfestigkeit und Witterungsstabilität den Anforderungen der Praxis noch nicht voll genügen.

Die Beschichtungsmittel gemäß DE-OS 3 134 157 enthalten größere Mengen an N-Vinylderivaten geradliniger oder cyclischer Amide. Nachteilig ist dabei die Notwendigkeit, die UV-Bestrahlung mehrmals durchführen zu müssen, um eine gute Kratzfestigkeit zu erhalten. Ferner kann eine niedrige Viskosität hierbei nur unter Verwendung großer N-Vinylpyrrolidonmengen erhalten werden, wodurch jedoch die Kratz- und Lösungsmittelfestigkeit wie auch die Witterungsstabilität reduziert werden. Zudem besteht bei der Verwendung größerer Anteile an N-Vinylpyrrolidon die Gefahr des Anlösens, der Eintrübung, sowie Spannungsrißauslösung des Polycarbonats, solange die Beschichtung noch nicht ausgehärtet ist. Außerdem ist N-Vinylpyrrolidon hinsichtlich der Arbeitsplatzhygiene bedenklich.

Auch die Urethanacrylate gemäß DE-OS 3 819 627 werden in Kombination mit N-Vinylverbindungen verarbeitet, was zu den bereits genannten nachteilhaften Folgen führt.

Die Urethanacrylate gemäß DE-OS 4 021 109 werden in Kombination mit tri- bis hexafunktionellen (Meth)acrylaten als reaktive Verdünner verarbeitet, um die genannten Nachteile der vorgenannten Lösungsmittel zu vermeiden. Die Witterungsstabilität der resultierenden Lackfilme ist jedoch ebenfalls nicht ausreichend, was an einem Haftverlust schon nach relativ kurzer Zeit erkenntlich wird.

Die DE-OS 3 318 147 befaßt sich schließlich mit speziellen Urethanacrylaten ohne jeglichen Zusammenhang mit dem speziellen Problem der Beschichtung von Polycarbonatformkörpern.

Wie jetzt überraschend gefunden wurde, gestattet die erfindungsgemäße Verwendung der nachstehend näher beschriebenen Beschichtungsmittel die Herstellung von Beschichtungen auf Formkörpern aus thermoplastischen Polycarbonaten, ohne mit den Nachteilen der Lacksysteme des Standes der Technik behaftet zu sein. Die erfindungsgemäß zu verwendenden Beschichtungsmittel unterscheiden sich z.B. von den Beschichtungsmitteln gemäß DE-OS 4 021 109 durch die Verwendung einer ausgewählten, niedrig-viskosen, Isocyanuratgruppen aufweisende Polyisocyanatkomponente zur Herstellung der Urethanacrylate, sowie durch die Verwendung von vorwiegend linearen Bis-acrylaten als Reaktivverdünner B).

Gegenstand der Erfindung ist die Verwendung von UV-härtbaren Beschichtungsmitteln, bestehend aus
A) 20 bis 75 Gew.-%, bezogen auf das Gesamtgewicht der Komponenten A), B) und C), an im wesentlichen Hydroxyl- und Isocyanatgruppen-freien Umsetzungsprodukte von
   A1) Hydroxyalkylacrylaten mit 2 bis 4 Kohlenstoffatomen im Alkylrest, gegebenenfalls in Abmischung mit bis zu 30 Hydroxyläquivalent-%, bezogen auf die Gesamtmenge der Komponente A1) an anderen Alkoholen, mit
   A2) einem aliphatischen, Isocyanuratgruppen aufweisenden Polyisocyanat,
B) 5 bis 80 Gew.-%, bezogen auf das Gesamtgewicht der Komponenten A), B) und C) einer niedrigviskosen Acrylsäureester-Komponente,
C) 0 bis 80 Gew.-%, bezogen auf das Gesamtgewicht der Komponenten A), B) und C) eines Lösungsmittels oder Lösungsmittelgemischs,
D) 0,1 bis 10 Gew.-%, bezogen auf das Gesamtgewicht der Komponenten A), B) und C) einer Initiator-Komponente, bestehend aus mindestens einem Photoinitiator und
E) gegebenenfalls weiteren Hilfs- und Zusatzstoffen
   zur Beschichtung von Formkörpern aus thermoplastischen Polycarbonaten, dadurch gekennzeichnet, daß
   die Komponente A2) aus einem Isocyanuratgruppenaufweisenden Polyisocyanat auf Basis von 1,6-Diisocyanatohexan mit einem NCO-Gehalt von 22 bis 23,5 Gew.-% und einer Viskosität von 23°C von 800 bis 1400 mPa.s und
   die Komponente B) zu mindestens 80 Gew.-% aus mindestens einem Bis-acrylat eines unter 350 liegenden Molekulargewichts eines, gegebenenfalls Ethersauerstoffatome aufweisenden, Alkandiols, gegebenenfalls in Abmischung mit bis zu 20 Gew.-%, bezogen auf das Gesamtgewicht der Komponente B) an anderen, dieser Definition nicht entsprechenden Acrylsäureestern,
   bestehen.

Die erfindungsgemäß zu verwendenden Beschichtungsmittel enthalten vorzugsweise, jeweils bezogen auf das Gesamtgewicht der Komponenten A), B) und C), 25 bis 60 Gew.-% der Komponente A), 10 bis 75 Gew.-% der Komponente B) und 10 bis 75 Gew.-% der Komponente C). Der Gehalt an Initiatorkomponente D) liegt vorzugsweise bei 1 bis 5 Gew.-%, ebenfalls bezogen auf das Gesamtgewicht der Komponenten A, B) und C).

Bei der erfindungswesentlichen Komponente A) handelt es sich um im wesentlichen Hydroxyl- und Isocyanagruppen-freie Umsetzungsprodukte aus den Ausgangskomponenten A1) und A2). Die Umsetzungsprodukte werden als "im wesentlichen Hydroxyl- und Isocyanatgruppen-frei" bezeichnet, da bei ihrer Herstellung die Ausgangskomponenten A1) und A2) unter Einhaltung eines Äquivalentverhältnisses von 0,9:1 bis 1,1:1, besonders bevorzugt von ca. 1:1 eingesetzt werden.

Bei den Ausgangsverbindungen A1) handelt es sich um Alkoxyalkylacrylate mit 2 bis 4 Kohlenstoffatomen im Hydroxyalkylrest oder, weniger bevorzugt, um Gemische derartiger Hydroxyalkylacrylate mit anderen, alkoholische Hydroxylgruppen-aufweisenden Verbindungen.

Geeignete Hydroxyalkylacrylate sind 2-Hydroxyethylacrylat, das bei der Anlage. rung von Propylenoxid an Acrylsäure entstehende Isomerengemisch oder 4-Hydroxybutylacrylat. 2-Hydroxyethylacrylat ist bevorzugt.

Geeignete andere Hydroxylverbindungen sind insbesondere ein- bis dreiwertige aliphatische Alkohole des Molekulargewichtsbereichs 32 bis 400, wie beispielsweise Methanol, Ethanol, n-Hexanol, Isooctanol, Isododecanol, Benzylalkohol, Ethylenglykol, Diethylenglykol, Propylenglykol, Glycerin oder aus diesen einfachen Alkoholen durch Alkoxylierung erhaltene Alkohole.

Bei der Komponente A2) handelt es sich um Isocyanuratgruppen aufweisende Polyisocyanate auf Basis von 1,6-Diisocyanatohexan (Hexamethylendiisocyanat, HDI) mit einem NCO-Gehalt von 22 bis 23,5 Gew.-% und einer Viskosität bei 23°C von 800 bis 1400 mPa.s. Derartige Polyisocyanate werden in an sich bekannter Weise durch Trimerisierung von HDI bis zu einem NCO-Gehalt des Reaktionsgemisches von 45 bis 42, vorzugsweise 44,5 bis 42,5 Gew.-% und anschließende Abstoppung der Reaktion, sowie destillativer Entfernung von nicht umgesetztem HDI bis auf einen Restgehalt von unter 0,5 Gew.-% erhalten.

Die Herstellung der Komponente A) durch Umsetzung der Ausgangskomponenten A1) und A2) kann nach bekannten Methoden, gegebenenfalls unter Mitverwendung von geeigneten Urethanisierungskatalysatoren erfolgen. Wie bereits angedeutet, erfolgt die Umsetzung unter Einhaltung eines NCO/OH-Äquivalentverhältnisses von 0,9:1 bis 1,1:1, insbesondere von ca. 1:1.

Geeignete Katalysatoren für die Umsetzung sind beispielsweise Zinn(II)octoat, Dibutylzinndilaurat oder tert.-Amine wie Dimethylbenzylamin. Die Umsetzung kann in Substanz oder auch in Gegenwart der als Reaktivverdünner mitverwendeten Komponente B) und/oder in Gegenwart der Lösungsmittelkomponente C) vorgenommen werden, sofern diese Komponenten keine mit Isocyanatgruppen reaktiven H-Atome enthalten.

Das Urethanacrylat A) kann bereits vor der Herstellung der erfindungsgemäß zu verwendenden Beschichtungsmittel durch Zugabe geeigneter Inhibitoren und Antioxidantien, wie beispielsweise Phenole und/oder Hydrochinone, in Mengen von jeweils 0,001 bis 0,3 Gew.-%, bezogen auf Urethanacrylat, vor vorzeitiger und unerwünschter Polymerisation geschützt werden. Ein gut geeigneter Inhibitor ist beispielsweise das in den Beispielen eingesetzte Phenothiazin. Der Zusatz dieser Hilfsmittel kann vor, gleichzeitig und/oder im Anschluß an die Umsetzung der Komponenten A1) und A2) erfolgen.

Die Komponente B) besteht aus Bis-acrylaten eines unter 350 liegenden Molekulargewichts von, gegebenenfalls Ethersauerstoffatome aufweisenden, Alkandiolen oder aus Gemischen derartiger Bis-acrylate mit bis zu 20 Gew.-%, bezogen auf das Gesamtgewicht der Komponente B) an anderen, dieser Definition nicht entsprechenden Acrylsäureester von tri- bis hexafunktionellen Alkoholen. Geeignete Bis-acrylate sind beispielsweise Dipropylenglykoldiacrylat, Tripropylenglykoldiacrylat, 1,4-Butandioldiacrylat oder 1,6-Hexandioldiacrylat. Geeignete Acrylsäureester höherer Alkohole sind beispielsweise Trimethylolpropantriacrylat, Pentaerythrittetraacrylat oder Sorbithexaacrylat. Die Komponente B) besteht vorzugsweise ausschließlich aus 1,6-Hexandioldiacrylat.

Geeignete Lösungsmittel C) sind beispielsweise C₅-C₈-Aliphate bzw. Cycloaliphate, fluorierte/chlorierte Kohlenwasserstoffe, C₁-C₆-aliphatische bzw. cycloaliphatische Alkohole und Lösungsmittelsysteme bestehend aus
a) 50 bis 95 Gew.-% C₁-C₆-aliphatische Alkohole, wie z.B. Methanol, Ethanol, Propanol, i-Propanol, n-Butanol, i-Butanol und
b) 5 bis 50 Gew.-% aliphatische Ester, wie z.B. Essigsäureethylester oder Essigsäurebutylester.

Als Fotoinhibitoren D) sind die üblicherweise eingesetzten Verbindungen geeignet, wie sie in "Methoden der organischen Chemie" (Houben-Weyl), Band E 20, Seite 80 ff, Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erfindungsgemäßen Lackkompositionen können mit Hilfs- und Zusatzmitteln E) der unterschiedlichsten Art abgemischt werden. Hierzu gehören UV-Absorber, Füllstoffe, Pigmente, Farbstoffe, Thixotropiermittel, Glättmittel, Mattierungsmittel oder Verlaufsmittel, die in den üblichen Mengen eingesetzt werden können.

Die Vermischung der Komponente A), B) C), D) und E) erfolgt nach üblichen Verfahren, z.B. bei Raumtemperatur oder leicht erhöhter Temperatur und vorzugsweise unter Ausschluß direkter Lichteinwirkung.

Die Beschichtungen der Polycarbonatartikel mit den erfindungsgemäßen Beschichtungsmitteln kann nach üblichen Verfahren, beispielsweise durch Spritz- und Tauchverfahren, erfolgen.

Die Härtung der Beschichtungen wird durch UV-Strahlung ausgelöst, wozu vorzugsweise handelsübliche UV-Strahler Verwendung finden.

Thermoplastische Polycarbonate, ihre Herstellung und ihre Verwendung zur Herstellung von Formkörpern sind beispielsweise in "Chemistry and Physics of Polcarbonates", Polymer Rev. Vol. 9, Interscience Publishers beschrieben.

Beispiele für Formkörper aus den thermoplastischen Polycarbonaten, die erfindungsgemäß beschichtet werden können, sind Gebrauchsgegenstände aller Art, wo Abrieb- und Kratzfestigkeit sowie Witterungsstabilität im besonderen Maß verlangt werden, beispielsweise Elektroartikel, Abdeckplatten, Sichtblenden, Sicherheitsscheiben oder Massivplatten.

### Beispiele

In den nachfolgenden Beispielen beziehen sich alle Angaben in % auf Gewichtsprozente.

Die in Tabelle 1 eingesetzten Polyisocyanate besitzen folgende Kenndaten:

### Polyisocyanat 1

Das Polyisocyanat wurde durch Trimerisierung von Hexamethylendiisocyanat bei 60 bis 65°C unter Katalyse von Trimethylbenzylammoniumhydroxid dadurch hergestellt, daß bei einem NCO-Gehalt von 43,6 bis 44 % die Trimerisierungsreaktion mit Dibutylphosphat abgestoppt und überschüssiges Hexamethylendiisocyanat im Kurzwegverdampfer bis auf einen Restgehalt von <0,5 % entfernt wurde.
- NCO-Gehalt:: 23 %
- Viskosität:: 1000 mPa.s (23°C)

### Polyisocyanat 2 (Polyisocyanat aus Mischung M1 der DE-OS 4 021 109)

Dieses Biuretpolyisocyanat auf HDI-Basis ist unter der Bezeichnung ®Desmodur N 3200 (Bayer AG) im Handel erhältlich.
- NCO-Gehalt:: 23 %
- Viskosität:: 3100 mPa.s (23°C)

### Polyisocyanat 3 (Polyisocyanat aus Mischung M2 der DE-OS 4 021 109)

Dieses Isocyanuratgruppen aufweisende Polyisocyanat auf HDI-Basis ist als ®Desmodur N 3300 (Bayer AG) im Handel erhältlich.
- NCO-Gehalt:: 22 %
- Viskosität:: 3100 mPa.s (25°C)

### Herstellung der Urethanacrylate (Komponente A)

Die in Tabelle 1 genannten Polyisocyanate wurden in 1,6-Hexandioldiacrylat gelöst. Nach Zugabe von 0,02 % Dibutylzinndilaurat sowie 0,01 % Phenothiazin, jeweils bezogen auf die Gewichtssumme von 100 aus Polyisocyanat und 2-Hydroxyethylacrylat wurde unter Durchleiten von trockener Luft bei 50 bis 60°C 2-Hydroxyethylacrylat zugegeben. Die Temperatur wurde so lange gehalten, bis der NCO-Gehalt unter 0,1 % abgesunken war.

**Tabelle 1**

| (Lösungen von Urethanacrylaten A) in einer Teilmenge Acrylsäureester B); (1) erfindungsgemäß, (2) und (3) Vergleich) | | | |
|---|---|---|---|
| Ausgangskomponenten (%) | Lösung 1 | Lösung 2 | Lösung 3 |
| Polyisocyanat 1 (A2) | 46,0 | - | - |
| Polyisocyanat 2 | - | 46,0 | - |
| Polyisocyanat 3 | - | - | 47,1 |
| 2-Hydroxyethylacrylat (A1) | 29,0 | 29,0 | 27,9 |
| 1,6-Hexandioldiacrylat (B) | 25,0 | 25,0 | 25,0 |
| Viskosität (mPa.s/23°C) | 4500 | 6500 | 8700 |

Die Lösungen der Urethanacrylate gemäß Tabelle 1 wurden nach der in der Tabelle 2 angegebenen Rezeptur zu Spritzlacken verarbeitet und in einem Arbeitsgang mit 20 g/m² auf Platten (145 x 65 x 3 mm) aus Bisphenol A-Homopolycarbonat (Makrolon AL 2443®, Bayer AG) gespritzt. Nach einer Ablüftungszeit von 3 Minuten bei Raumtemperatur wurden die Beschichtungen mittels einer UV-Bestrahlungsanlage der Firma IST (1 Quecksilberhochdruck-UV-Strahler, 80 W/cm, 1 m/Min. Bandgeschwindigkeit) ausgehärtet.

Zur Ermittlung der Kratzfestigkeit wurde die Trübungszunahme nach Berieselung der Probe mit Quarzsand entsprechend DIN 52348 gemessen.

Die Witterungsbeständigkeit wurde durch Kurzbewitterungstests (DIN 53231, Xenotest 1200) geprüft.

Zur Beurteilung der Haftung der Beschichtung und deren Witterungsbeständigkeit wurde eine Gitterschnittprüfung durch Einritzen eines Rasters von 6 x 6 Linien mit einem Abstand von jeweils 1 mm in die Beschichtung mit anschließendem Aufdrücken sowie schnellem Abziehen eines Klebebandes durchgeführt.

**Tabelle 2**

| Lackzusammensetzung (%) | Beispiel 1 | Vergleichsbeispiele | |
|---|---|---|---|
| | | 2 | 3 |
| Lösung 1 | 36,0 | | |
| Lösung 2 | | 36,0 | |
| Lösung 3 | | | 36,0 |
| 1,6-Hexandioldiacrylat (B) | 34,9 | 34,9 | 34,9 |
| Lösungsmittelgemisch∗ (C) | 25,0 | 25,0 | 25,0 |
| 2-Hydroxy-2-methyl-1-phenyl-1-propan-1-on (Fotoinhibitor) | 2,0 | 2,0 | 2,0 |
| ®Tinuvin 350∗∗ | 1,4 | 1,4 | 1,4 |
| ®Tinuvin 292∗∗∗ | 0,7 | 0,7 | 0,7 |

| | | | |
|---|---|---|---|
| ∗ Lösungsmittelgemisch besteht aus: 27,3 % Ethanol, 36,3 % Isopropanol, 27,3 % Ethylacetat, 9,1 % n-Butanol | | | |
| ∗∗ Lichtschutzmittel der Fa. Ciba-Geigy | | | |
| ∗∗∗ Lichtschutzmittel der Fa. Ciba-Geigy | | | |

Tabelle 3 zeigt die Ergebnisse der lacktechnischen Prüfungen.

**Tabelle 3**

| | Beispiel 1 | Vergleichsbeispiele | |
|---|---|---|---|
| | | 2 | 3 |
| Kratzfestigkeit | gut | gut | gut |
| Haftungsverlust nach Bewitterung (Stunden) | > 3000 | < 1500 | < 1500 |

## Patentansprüche

1. Verwendung von UV-härtbaren Beschichtungsmitteln, bestehend aus
A) 20 bis 75 Gew.-%, bezogen auf das Gesamtgewicht der Komponenten A), B) und C), an im wesentlichen Hydroxyl- und Isocyanatgruppen-freien Umsetzungsprodukte von
A1) Hydroxyalkylacrylaten mit 2 bis 4 Kohlenstoffatomen im Alkylrest, gegebenenfalls in Abmischung mit bis zu 30 Hydroxyläquivalent-%, bezogen auf die Gesamtmenge der Komponente A1) an anderen Alkoholen, mit
A2) einem aliphatischen, Isocyanuratgruppen aufweisenden Polyisocyanat,
B) 5 bis 80 Gew.-%, bezogen auf das Gesamtgewicht der Komponenten A), B) und C) einer niedrigviskosen Acrylsäureester-Komponente,
C) 0 bis 80 Gew.-%, bezogen auf das Gesamtgewicht der Komponenten A), B) und C) eines Lösungsmittels oder Lösungsmittelgemischs,
D) 0,1 bis 10 Gew.-%, bezogen auf das Gesamtgewicht der Komponenten A), B) und C) einer Initiator-Komponente, bestehend aus mindestens einem Photoinitiator und
E) gegebenenfalls weiteren Hilfs- und Zusatzstoffen
zur Beschichtung von Formkörpern aus thermoplastischen Polycarbonaten, dadurch gekennzeichnet, daß
die Komponente A2) aus einem Isocyanuratgruppen aufweisenden Polyisocyanat auf Basis von 1,6-Diisocyanatohexan mit einem NCO-Gehalt von 22 bis 23,5 Gew.-% und einer Viskosität von 23°C von 800 bis 1400 mPa.s und
die Komponente B) zu mindestens 80 Gew.-% aus mindestens einem Bis-acrylat eines unter 350 liegenden Molekulargewichts eines, gegebenenfalls Ethersauerstoffatome-aufweisenden, Alkandiols, gegebenenfalls in Abmischung mit bis zu 20 Gew.-%, bezogen auf das Gesamtgewicht der Komponente B) an anderen, dieser Definition nicht entsprechenden Acrylsäureestern,
bestehen.

2. Verwendung gemäß Anspruch 1, dadurch gekennzeichnet, daß die Komponente A1) aus 2-Hydroxyethylacrylat besteht.

## Claims

1. Use of UV-curable coating compositions consisting of
A) 20 to 75 wt.%, relative to the total weight of components A), B) and C), of reaction products, containing substantially no hydroxyl or isocyanate groups, of
A1) hydroxyalkyl acrylates having 2 to 4 carbon atoms in the alkyl residue, optionally blended with up to 30 hydroxyl equivalent-%, relative to the total quantity of component A1), of other alcohols, with
A2) an aliphatic polyisocyanate containing isocyanurate groups,
B) 5 to 80 wt.%, relative to the total weight of components A), B) and C), of a low viscosity acrylic acid ester component,
C) 0 to 80 wt.%, relative to the total weight of components A), B) and C), of a solvent or solvent mixture,
D) 0.1 to 10 wt.%, relative to the total weight of components A), B) and C), of an initiator component, consisting of at least one photoinitiator and
E) optionally further auxiliary substances and additives
for coating mouldings made from thermoplastic polycarbonates, characterised in that
component A2) consists of a polyisocyanate containing isocyanurate groups and based on 1,6-diisocyanatohexane and having an NCO content of 22 to 23.5 wt.% and a viscosity at 23°C of 800 to 1400 mPa·s and
at least 80 wt.% of component B) consists of a bisacrylate of a molecular weight of below 350 of an alkanediol optionally containing ether oxygen atoms, optionally blended with up to 20 wt.%, relative to the total weight of component B), of other acrylic acid esters not complying with this definition.

2. Use according to claim 1, characterised in that component A1) consists of 2-hydroxyethyl acrylate.

## Revendications

1. Utilisation d'agents d'enduction durcissables aux UV, constitués par
A) à concurrence de 20 à 75% en poids, rapportés au poids total des composants A), B) et C), des produits réactionnels essentiellement exempts de groupes hydroxyle et isocyanate,
A1) d'acrylates d'hydroxyalkyle contenant de 2 à 4 atomes de carbone dans le radical alkyle, éventuellement en mélange avec, jusqu'à concurrence de 30% d'équivalents hydroxyle, rapportés à la quantité totale du composant A1), d'autres alcools, avec
A2) un polyisocyanate aliphatique présentant des groupes isocyanurate;
B) à concurrence de 5 à 80% en poids, rapportés au poids total des composants A), B) et C), un composant d'ester acrylique faiblement visqueux,
C) à concurrence de 0 à 80% en poids, rapportés au poids total des composants A), B) et C), un solvant ou un mélange de solvants,
D) à concurrence de 0,1 à 10% en poids, rapportés au poids total des composants A), B) et C), un composant d'initiateur constitué d'au moins un photoinitiateur, et
E) le cas échéant, d'autres adjuvants et additifs,
pour l'enduction de corps moulés constitués par des polycarbonates thermoplastiques, caractérisée en ce que
le composant A2) est constitué d'un polyisocyanate présentant des groupes isocyanurate, à base du 1,6-diisocyanatohexane possédant une teneur NCO de 22 à 23,5% en poids et une viscosité à 23°C de 800 à 1400 mPa.s, et
le composant B) est constitué, jusqu'à concurrence d'au moins 80% en poids, par au moins un bis-acrylate possédant un poids moléculaire inférieur à 350 d'un alcanediol présentant éventuellement des atomes d'oxygène relatifs à des éthers, éventuellement en mélange avec, jusqu'à concurrence de 20% en poids rapportés au poids total du composant B), d'autres esters acryliques ne correspondant pas à cette définition.

2. Utilisation selon la revendication 1, caractérisée en ce que le composant A1) est constitué d'acrylate de 2-hydroxyéthyle.
